# EUROPÄISCHE PATENTSCHRIFT

(11) **EP 3 737 878 B1**
(45) Veröffentlichungstag und Bekanntmachung des Hinweises auf die Patenterteilung: **22.09.2021**
(21) Anmeldenummer: 18830754.0
(22) Anmeldetag: 12.12.2018
(51) Int. Cl.: F16H 57/04

(54) **VERFAHREN ZUR REGELUNG EINER TEMPERIERUNG EINES ANTRIEBSSYSTEMS**
METHOD FOR REGULATING TEMPERATURE CONTROL OF A DRIVE SYSTEM
PROCÉDÉ DE RÉGULATION D'UNE THERMORÉGULATION D'UN SYSTÈME D'ENTRAÎNEMENT

(30) Priorität: 12.01.2018 DE 102018200460
(43) Veröffentlichungstag der Anmeldung: 18.11.2020
(73) Patentinhaber: VOLKSWAGEN AKTIENGESELLSCHAFT, 38440 Wolfsburg (DE)
(72) Erfinder: GEBERT, Simon, 38440 Wolfsburg (DE); GRAUROCK, Christian, 10715 Berlin (DE)
(86) Internationale Anmeldenummer: PCT/EP2018/084634
(87) Internationale Veröffentlichungsnummer: WO 2019/137729

(56) Entgegenhaltungen:
- EP-A2- 0 787 929
- DE-A1- 10 332 949
- DE-A1-102011 120 206
- DE-A1-102016 203 212

## Beschreibung

Die Erfindung betrifft ein Verfahren zur Regelung einer Temperierung eines Antriebssystems, insbesondere für ein Antriebssystem eines Kraftfahrzeuges.

Das Antriebssystem umfasst zumindest ein Getriebe mit einer ersten Einrichtung zum Temperieren des Getriebes und eine Antriebseinheit.

Insbesondere nach einem Kaltstart eines Antriebssystems, also in einer Aufheizphase z. B. der Antriebseinheit (eine Verbrennungskraftmaschine oder elektrische Maschine, etc.), kann Energie (z. B. Kraftstoff, elektrische Energie, ggf. Schadstoffe wie Kohlendioxid, etc.) eingespart werden, wenn ein als Kühlmittel eingesetztes Fluid zur Erwärmung von mit Reibungsverlusten behafteten Bauteilen verwendet wird. Insbesondere bei einem Getriebe lassen sich durch aktives Beheizen des Getriebes die Reibungsverluste verringern. Bevorzugt hat die Antriebseinheit wegen der höheren (Reibungs-)Verluste (z. B. im Zylinderkurbelgehäuse) Vorrang beim Thermomanagement.

In diesem Zusammenhang offenbart das Dokument DE 10332949 A1 eine Brennkraftmaschine mit einer Hauptkühlmittelpumpe und einer ersten Steuereinheit, die das Kühlmittel entweder über einen großen Kühlkreislauf, in dem ein Luft-Flüssigkeitskühler angeordnet ist, oder über einen kleinen Kühlkreislauf (18) unter Umgehung des Luft-Flüssigkeitskühlers (17) zum Ansaugmund der Hauptkühlmittelpumpe (1) zurückleitet. Des Weiteren ist ein zweiter Wärmetauscher (24) zur Vorwärmung oder Kühlung eines Ölstromes, insbesondere von Getriebeöl, im Kühlkreislauf der Brennkraftmaschine angeordnet. Der Kühlmitteldurchfluss durch den zweiten Wärmetauscher ist über eine zweite Steuereinheit (27) gesteuert. Dabei gibt die zweite Steuereinheit (27) den Durchfluss durch den zweiten Wärmetauscher (24) erst ab einer vorgegebenen Temperatur frei.

Für das Beheizen eines Getriebes wird insbesondere ein heißes Fluid vom Kühlmantel der Antriebseinheit durch einen Wärmetauscher geleitet, um ein Getriebefluid aufzuwärmen. Es ist auch möglich, dass das Getriebe über diesen Weg überschüssige Wärme abgibt und diese an die Umgebung abführt.

Das Beheizen eines Getriebes kann erst dann einsetzen, wenn das Fluid einen bestimmten Grenzwert der Temperatur erreicht oder überschritten hat. Danach kann Wärme von der Antriebseinheit an das Getriebe abgegeben werden. Sollte während des Beheizens des Getriebes die Temperatur des Fluids zu stark sinken, wird das Beheizen des Getriebes wieder eingestellt. Die hierfür geltenden Grenzwerte der Temperatur (Grenztemperaturen) des Fluid sind statisch und werden im Betrieb des Antriebssystems nicht verändert.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das die zum Betrieb des Antriebssystems erforderliche Energie reduziert werden kann.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Regelung einer Temperierung eines Antriebssystems vorgeschlagen, insbesondere für ein Antriebssystem eines Kraftfahrzeuges. Das Antriebssystem weist zumindest ein Getriebe mit einer ersten Einrichtung zum Temperieren des Getriebes und eine Antriebseinheit auf. Die erste Einrichtung wird in Abhängigkeit von einer sich ändernden Solltemperatur der Antriebseinheit betrieben. Eine Inbetriebnahme (insbesondere eine erste Inbetriebnahme nach einem Kaltstart der Antriebseinheit) der ersten Einrichtung und damit ein Beheizen des Getriebes erfolgt, wenn eine Isttemperatur der Antriebseinheit mindestens eine obere erste Grenztemperatur erreicht hat, wobei ein Betrieb der ersten Einrichtung eingestellt ist, wenn die Isttemperatur der Antriebseinheit höchstens einer unteren ersten Grenztemperatur entspricht. Dabei ist zu jedem Zeitpunkt die obere Grenztemperatur größer ist als die untere Grenztemperatur. Das Verfahren umfasst zumindest die folgenden Schritte:
a) Feststellen einer Änderung der Solltemperatur von einer ersten Solltemperatur auf eine zweite Solltemperatur;
b) Änderung zumindest der oberen ersten Grenztemperatur in eine obere zweite Grenztemperatur oder der unteren ersten Grenztemperatur in eine untere zweite Grenztemperatur, jeweils in Abhängigkeit von der Änderung der Solltemperatur, so dass sich die zweite Grenztemperatur von der ersten Grenztemperatur unterscheidet.

Die Antriebseinheit wird insbesondere über ein Fluid temperiert. Die Antriebseinheit ist z. B. eine Verbrennungskraftmaschine, die über einen Wassermantel temperierbar ist, wobei das Fluid (z. B. Wasser) den Wassermantel durchströmt. Insbesondere kann das Fluid vom Wassermantel über einen Wärmetauscher geleitet werden, so dass ein für die erste Einrichtung verwendetes Fluid temperierbar ist.

Die erste Einrichtung dient insbesondere der Temperierung des Getriebes. Über die erste Einrichtung wird Wärmeenergie ausgehend von der Antriebseinheit hin zum Getriebe transportiert. Die erste Einrichtung kann z. B. den dem Getriebe zugeordneten Teil des Wärmetauschers umfassen, der zur Temperierung des für die Temperierung des Getriebes vorgesehenen Fluids eingesetzt wird. Die erste Einrichtung kann auch ein Getriebefluid umfassen, das über den Wärmetauscher temperierbar ist und selber zum Erwärmen des Getriebes eingesetzt wird.

Die Antriebseinheit wird insbesondere mit einer sich ändernden Solltemperatur betrieben. Diese Solltemperatur kann insbesondere z. B. zwischen 80 Grad Celsius und 105 Grad Celsius variieren. Je nach Betriebspunkt der Antriebseinheit kann eine vorbestimmte Solltemperatur definiert bzw. vorgegeben sein, so dass ein Thermomanagement des Antriebssystems die Isttemperatur der Antriebseinheit entsprechend regelt.

Insbesondere wird die erste Einrichtung erst dann betrieben (und damit das Getriebe beheizt), wenn die Antriebseinheit soweit aufgeheizt ist, dass die Isttemperatur der Antriebseinheit mindestens eine (vorgegebene bzw. gespeicherte bzw. zuvor ermittelte) obere erste Grenztemperatur erreicht hat. So kann insbesondere sichergestellt werden, dass Wärmeenergie bevorzugt (im Wesentlichen) exklusiv zum Aufheizen für die Antriebseinheit verwendet wird. Eine Verwendung von Wärmeenergie zum Aufheizen des Getriebes ist bis zum Erreichen der oberen ersten Grenztemperatur insbesondere nicht vorgesehen bzw. wird bis dahin nicht eingestellt. Damit kann eine möglichst schnelle Aufheizung der Antriebseinheit realisiert werden, so dass Reibungsverluste in der Antriebseinheit möglichst schnell minimiert werden können.

Bevorzugt wird die erste Einrichtung dann nicht betrieben (sondern ist insbesondere inaktiv), wenn die Isttemperatur höchstens einer (vorgegebenen bzw. gespeicherten bzw. zuvor ermittelten) unteren Grenztemperatur entspricht. In diesem Fall wird insbesondere davon ausgegangen, dass die verfügbare Wärmeenergie bevorzugt (im Wesentlichen) exklusiv zum Aufheizen für die Antriebseinheit verwendet wird.

Insbesondere wird die erste Einrichtung dann betrieben bzw. aktiviert, wenn die Isttemperatur die obere Grenztemperatur zumindest einmal erreicht oder überschritten hat. Die erste Einrichtung wird danach bzw. (unmittelbar) im Anschluss daran betrieben, solange die Isttemperatur die untere Grenztemperatur nicht wieder erreicht oder unterschritten hat.

Im Rahmen des Verfahrens wird, wenn z. B. eine Änderung der Solltemperatur zu einer (vorgegebenen) höheren zweiten Solltemperatur vorliegt, zunächst die Antriebseinheit bzw. die Isttemperatur so geregelt, dass sie (möglichst schnell) die geänderte (zweite) Solltemperatur erreicht. Aus diesem Grund wird die obere Grenztemperatur so geändert, dass eine Inbetriebnahme der ersten Einrichtung (und damit ein Abführen von Wärmeenergie hin zum Getriebe) möglichst lange nicht erfolgt. Insbesondere wird die obere Grenztemperatur so eingestellt, dass sie im Wesentlichen der geänderten Solltemperatur entspricht (bzw. etwas kleiner als die Solltemperatur ist, insbesondere höchstens 2 Kelvin kleiner, bevorzugt 1 Kelvin kleiner).

Wenn z. B. eine Änderung der Solltemperatur zu einer niedrigeren zweiten Solltemperatur vorliegt, wird zunächst die Antriebseinheit bzw. die Isttemperatur so geregelt, dass sie (möglichst schnell) die geänderte (zweite) Solltemperatur erreicht. Aus diesem Grund wird die untere Grenztemperatur so geändert, dass z. B. eine erste Einrichtung weiter betrieben wird (und damit ein Abführen von Wärmeenergie hin zum Getriebe erfolgt), so dass Wärmeenergie von der Antriebseinheit abgeführt werden kann.

Insbesondere erfolgt die Durchführung des Verfahrens ausgehend von einem Betrieb der ersten Einrichtung. Ein Betrieb der ersten Einrichtung (und damit ein Beheizen des Getriebes) wird fortgeführt, wenn eine Isttemperatur der Antriebseinheit mindestens einer (vorgegebenen) oberen Grenztemperatur entspricht, wobei ein Betrieb der ersten Einrichtung eingestellt wird, wenn die Isttemperatur der Antriebseinheit höchstens einer (vorgegebenen) unteren Grenztemperatur entspricht.

Bevorzugt wird die obere zweite Grenztemperatur der sich ändernden Solltemperatur zeitlich nachgeführt, bis die obere zweite Grenztemperatur der zweiten Solltemperatur entspricht (bzw. nahezu entspricht, also insbesondere höchstens 2 Kelvin geringer ist, bevorzugt höchstens 1 Kelvin geringer).

Insbesondere wird die untere zweite Grenztemperatur der sich ändernden Solltemperatur zeitlich nachgeführt.

Bevorzugt ist die untere Grenztemperatur immer (im Betrieb) geringer als die (aktuell vorliegende) Solltemperatur.

Insbesondere werden die Grenztemperaturen unmittelbar nach Beginn der Änderung der Solltemperatur geändert. Bevorzugt erreichen die Grenztemperaturen den vorgesehenen Endwert (also ausgehend von der ersten Grenztemperatur die zweite Grenztemperatur) innerhalb eines zeitlichen Abstands von höchstens 10 Sekunden, insbesondere innerhalb von höchstens 5 Sekunden.

Insbesondere wird eine Differenz zwischen der oberen Grenztemperatur und der unteren Grenztemperatur in Abhängigkeit von einer Geschwindigkeit der Änderung der Solltemperatur geändert, insbesondere proportional dazu. Das heißt insbesondere, je schneller die Änderung der Solltemperatur erfolgt, umso kleiner wird die Differenz eingestellt.

Insbesondere erfolgt die Änderung der Differenz gegenüber der Änderung der Solltemperatur in dem beschriebenen zeitlichen Abstand.

Insbesondere kann die Differenz zwischen mindestens null Kelvin und höchstens 10 Kelvin betragen. Bevorzugt zwischen mindestens einem Kelvin und 7 Kelvin Diese Änderung der Differenz dient insbesondere dazu, dass beim Nachführen der Isttemperatur die erste Einrichtung zum Getriebeheizen ggf. ausgeschaltet werden kann, damit die Isttemperatur die obere Grenztemperatur schneller erreicht. Wenn die Isttemperatur den zweiten Sollwert schnell genug erreicht, schaltet sich die erste Einrichtung nicht unbedingt ab.

Insbesondere ist eine zu einem ersten Zeitpunkt vorliegende erste Differenz zwischen der oberen Grenztemperatur und der unteren Grenztemperatur kleiner als eine zu einem zweiten Zeitpunkt vorliegende zweite Differenz zwischen der oberen Grenztemperatur und der unteren Grenztemperatur.

Zum ersten Zeitpunkt kann die Isttemperatur außerhalb eines Intervalls zwischen der oberen Grenztemperatur und der unteren Grenztemperatur liegen. Zum zweiten Zeitpunkt kann die Isttemperatur innerhalb des Intervalls zwischen der oberen Grenztemperatur und der unteren Grenztemperatur liegen.

Insbesondere beträgt die erste Differenz mindestens 0 Kelvin und höchstens 3 Kelvin, bevorzugt höchstens 2 Kelvin. Insbesondere beträgt die zweite Differenz mindestens 5 Kelvin und höchstens 10 Kelvin, bevorzugt höchstens 7 Kelvin.

Insbesondere wird, wenn die Isttemperatur außerhalb eines Intervalls zwischen der oberen Grenztemperatur und der unteren Grenztemperatur liegt, die Isttemperatur an die bereits geänderte zweite Solltemperatur angepasst. Eine geringe erste Differenz kann insbesondere gewährleisten, dass diese Anpassung möglichst schnell durchgeführt werden kann.

Die größere zweite Differenz stellt insbesondere sicher, dass die erste Einrichtung möglichst lange betrieben oder eben nicht betrieben wird.

Das Antriebssystem kann einen zuschaltbaren Kühler umfassen, wobei der Kühler zugeschaltet wird, wenn die Solltemperatur die erste Isttemperatur unterschreitet.

Insbesondere dient der Kühler dem Absenken der Isttemperatur. Über den Kühler kann Wärmeenergie insbesondere an die Umgebung abgeführt werden. Über die Zuschaltung des Kühlers kann die Isttemperatur möglichst schnell reduziert werden.

Es wird weiter ein Antriebssystem für ein Kraftfahrzeug vorgeschlagen, wobei das Antriebssystem zumindest ein Getriebe mit einer ersten Einrichtung zum Temperieren des Getriebes und eine Antriebseinheit zum Antrieb des Kraftfahrzeuges sowie eine Steuereinheit aufweist. Die Antriebseinheit ist mit einer sich ändernden Solltemperatur betreibbar. Das Antriebssystem ist über die Steuereinheit durch das bereits beschriebene Verfahren betreibbar. Die Steuereinheit ist zur Durchführung des Verfahrens eingerichtet und/oder geeignet bzw. kann das Verfahren durchführen.

Insbesondere ist die Antriebseinheit durch ein Fluid (z. B. Wasser) temperierbar, wobei über das Fluid die erste Einrichtung (z. B. ein Wärmetauscher und/oder ein Getriebefluid) und damit das Getriebe temperierbar ist; wobei über das Fluid die Isttemperatur der Antriebseinheit bestimmbar ist.

Bevorzugt weist das Antriebssystem einen zuschaltbaren Kühler zum Temperieren des Fluids auf.

Es wird weiterhin ein Kraftfahrzeug vorgeschlagen, dass das bereits beschriebene Antriebssystem aufweist.

Die Ausführungen zu dem Verfahren gelten gleichermaßen für das Antriebssystem und das Kraftfahrzeug und umgekehrt.

Als ein weiterer Aspekt wird eine Steuereinheit vorgestellt, die dazu bestimmt und eingerichtet ist, alle Schritte des Verfahrens durchzuführen.

Zudem wird ein Computerprogramm vorgestellt, das dazu bestimmt und eingerichtet ist, alle Schritte des beschriebenen Verfahrens durchzuführen. Weiter wird ein maschinenlesbares Speichermedium vorgestellt, auf dem das Computerprogramm gespeichert ist.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug mit einem Antriebssystem;
- Fig. 2:: ein Diagramm, in dem ein bekanntes Verfahren zum Temperieren eines Getriebes dargestellt ist, wobei eine Solltemperatur erhöht wird;
- Fig. 3:: ein Diagramm, in dem ein Verfahren zum Temperieren eines Getriebes dargestellt ist, wobei eine Solltemperatur erhöht wird;
- Fig. 4:: ein Diagramm, in dem ein bekanntes Verfahren zum Temperieren eines Getriebes dargestellt ist, wobei eine Solltemperatur herabgesetzt wird; und
- Fig. 5:: ein Diagramm, in dem ein Verfahren zum Temperieren eines Getriebes dargestellt ist, wobei eine Solltemperatur herabgesetzt wird.

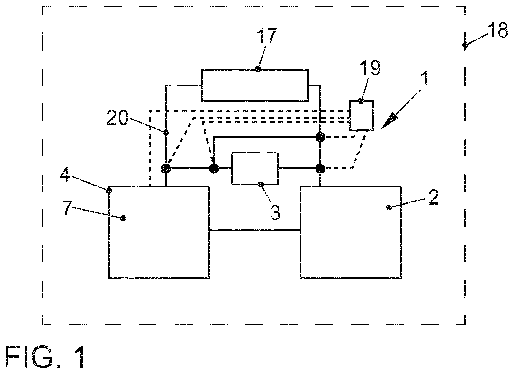

Die Fig. 1 zeigt ein Kraftfahrzeug 18 mit einem Antriebssystem 1. Das Antriebssystem 1 umfasst ein Getriebe 2 mit einer ersten Einrichtung 3 zum Temperieren des Getriebes 2 und eine Antriebseinheit 4 zum Antrieb des Kraftfahrzeuges 18 sowie eine Steuereinheit 19. Die Antriebseinheit 4 ist mit einer sich ändernden Solltemperatur 5, 6 betreibbar. Das Antriebssystem ist über die Steuereinheit 19 durch das bereits beschriebene Verfahren betreibbar. Über die Steuereinheit 19 kann die Isttemperatur 7 der Antriebseinheit 4 erfasst werden. Weiter kann über die Steuereinheit 19 die Temperierung von Antriebseinheit 4, erster Einrichtung 3, Getriebe 2 und Kühler 17 gesteuert werden.

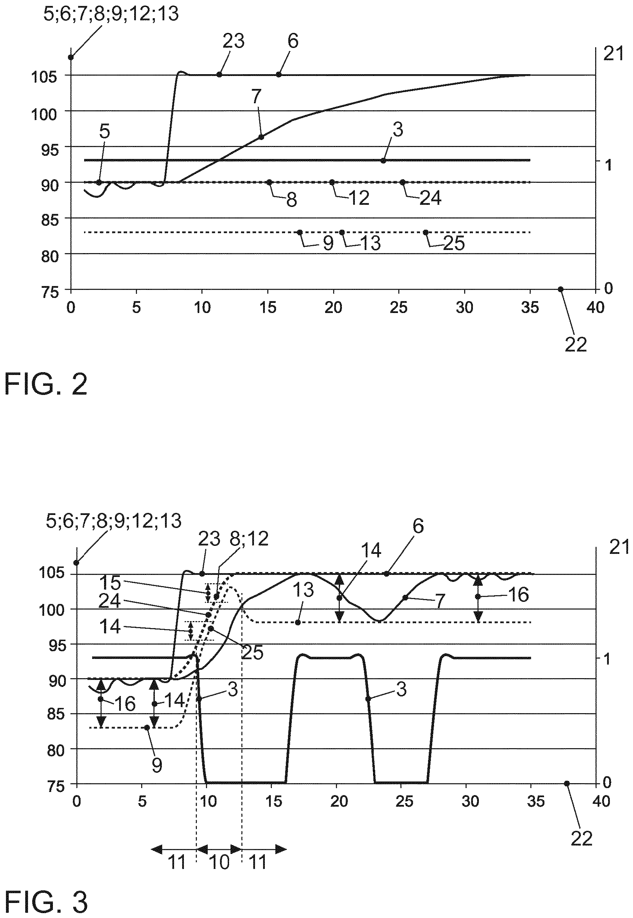

Fig. 2 zeigt ein Diagramm, in dem ein bekanntes Verfahren zum Temperieren eines Getriebes 2 dargestellt ist, wobei eine Solltemperatur 5, 6 erhöht wird. An der linken vertikalen Achse ist die Temperatur 5, 6, 7, 8, 9, 12, 13 aufgetragen. An der rechten vertikalen Achse ist der Zustand 21 der ersten Einrichtung 3 aufgetragen: "1" steht hierbei für "In Betrieb", das heißt, die Beheizung des Getriebes 2 erfolgt über die erste Einrichtung 3; ,,0" steht hierbei für "Betrieb eingestellt", das heißt, es erfolgt keine Beheizung des Getriebes 2 über die erste Einrichtung 3. An der horizontalen Achse ist die Zeit 22 aufgetragen.

Hier wird von einem Betrieb der ersten Einrichtung 3 als Anfangszustand ausgegangen. Es liegen feste obere Grenztemperaturen 8, 12 (siehe zweite Kurve 24) und feste untere Grenztemperaturen 9, 13 (siehe dritte Kurve 25) vor. Die erste Kurve 23 zeigt den Anstieg der Solltemperatur 5, 6 ausgehend von einer ersten Solltemperatur 5 hin zu einer zweiten Solltemperatur 6.

Ein Betrieb der ersten Einrichtung 3 (und damit ein Beheizen des Getriebes 2) wird dabei fortgeführt, wenn eine Isttemperatur 7 der Antriebseinheit 4 mindestens der oberen Grenztemperatur 8, 12 entspricht, wobei ein Betrieb der ersten Einrichtung 3 eingestellt werden würde, wenn die Isttemperatur 7 der Antriebseinheit 4 höchstens der unteren Grenztemperatur 9, 13 entsprechen würde.

Nach dem Anstieg der Solltemperatur 5, 6 auf die zweite Solltemperatur 6 wird die Isttemperatur 7 nachgeregelt. Die Isttemperatur 7 steigt jedoch sehr langsam. Dies ist dadurch begründet, dass Wärmeenergie kontinuierlich von der Antriebseinheit 4 hin zum Getriebe 2 über die erste Einrichtung 3 übertragen wird.

Fig. 3 zeigt ein Diagramm, in dem ein Verfahren zum Temperieren eines Getriebes 2 dargestellt ist, wobei eine Solltemperatur 5, 6 erhöht wird. Auf die Ausführungen zu Fig. 2 wird verwiesen.

Auch hier wird von einem Betrieb der ersten Einrichtung 3 als Anfangszustand ausgegangen. Die Isttemperatur 7 befindet sich anfänglich in einem Intervall 14 zwischen der ersten oberen Grenztemperatur 8 und der ersten unteren Grenztemperatur 9, es liegen also zweite Zeitpunkte 11 vor.

Die erste Einrichtung 3 wird in Abhängigkeit von einer sich ändernden Solltemperatur 5, 6 (erste Kurve 23) der Antriebseinheit 4 betrieben. Ein Betrieb der ersten Einrichtung 3 und damit ein Beheizen des Getriebes 2 erfolgt, wenn eine Isttemperatur 7 der Antriebseinheit 4 mindestens eine obere erste Grenztemperatur 8 erreicht hat, wobei ein Betrieb der ersten Einrichtung 3 eingestellt ist, wenn die Isttemperatur 7 der Antriebseinheit 4 höchstens einer unteren ersten Grenztemperatur 9 entspricht. Dabei ist zu jedem Zeitpunkt 10, 11 die obere Grenztemperatur 8, 12 größer ist als die untere Grenztemperatur 9, 13. Im Rahmen eines Schritts a) wird eine Änderung der Solltemperatur 5, 6 von einer ersten Solltemperatur 5 auf eine zweite Solltemperatur 6 festgestellt. In Schritt b) erfolgt eine Änderung der oberen ersten Grenztemperatur 8 in eine obere zweite Grenztemperatur 12 (zweite Kurve 24) und der unteren ersten Grenztemperatur 9 in eine untere zweite Grenztemperatur 13 (dritte Kurve 25), jeweils in Abhängigkeit von der Änderung der Solltemperatur 5, 6, so dass sich die zweite Grenztemperatur 12, 13 von der ersten Grenztemperatur 8, 9 unterscheidet.

Im Rahmen des Verfahrens wird, nach der Änderung der Solltemperatur 5, 6 zu einer höheren zweiten Solltemperatur 6, zunächst die Antriebseinheit 4 bzw. die Isttemperatur 7 so geregelt, dass sie möglichst schnell die geänderte zweite Solltemperatur 6 erreicht (zweite Kurve 24). Aus diesem Grund wird die untere Grenztemperatur 9, 13 so geändert (dritte Kurve 25), dass ein Betrieb der ersten Einrichtung 3 (und damit ein Abführen von Wärmeenergie hin zum Getriebe 2) möglichst schnell eingestellt wird. Durch die Änderung der unteren Grenztemperatur 9, 13 liegt die Isttemperatur 7 innerhalb kurzer Zeit außerhalb des Intervalls 14 zwischen oberer Grenztemperatur 8, 12 und unterer Grenztemperatur 9, 13. Die Iststemperatur 7 ist dann geringer als die untere Grenztemperatur 9, 13, so dass die erste Einrichtung 3 außer Betrieb gesetzt wird. Es wird damit keine Wärmeenergie hin zum Getriebe 2 abgeführt, so dass die Aufheizung der Antriebseinheit 4 schneller erfolgen kann. Erst wenn die Isttemperatur 7 die obere zweite Grenztemperatur erreicht hat, wird der Betrieb der ersten Einrichtung 3 wieder aufgenommen.

Hier wird die obere zweite Grenztemperatur 12 der sich ändernden Solltemperatur 5, 6 zeitlich nachgeführt, bis die obere zweite Grenztemperatur 12 der zweiten Solltemperatur 6 entspricht (bzw. fast erreicht hat, ggf. bis zu 2 Kelvin, bevorzugt 1 Kelvin darunter). Auch die untere zweite Grenztemperatur 13 wird der sich ändernden Solltemperatur 5, 6 zeitlich nachgeführt. Die untere Grenztemperatur 9, 13 ist immer geringer als die (aktuell vorliegende) Solltemperatur 5, 6.

Ein Betrieb der ersten Einrichtung 3 (und damit ein Beheizen des Getriebes 2) wird fortgeführt, wenn eine Isttemperatur 7 der Antriebseinheit 4 mindestens einer oberen Grenztemperatur 8, 12 entspricht, wobei ein Betrieb der ersten Einrichtung 3 eingestellt wird, wenn die Isttemperatur 7 der Antriebseinheit 4 höchstens einer unteren Grenztemperatur 9, 13 entspricht.

Die Grenztemperaturen 8, 9, 12, 13 werden unmittelbar nach Beginn der Änderung der Solltemperatur 5, 6 geändert. Die Grenztemperaturen 8, 9, 12, 13 erreichen den vorgesehenen Endwert (also ausgehend von der ersten Grenztemperatur 8, 9 die zweite Grenztemperatur 12, 13) innerhalb eines zeitlichen Abstands von hier ca. 5 Sekunden.

Eine zu einem ersten Zeitpunkt 10 vorliegende erste Differenz 15 zwischen der oberen Grenztemperatur 8, 12 und der unteren Grenztemperatur 9, 13 ist kleiner als eine zu einem zweiten Zeitpunkt 11 vorliegende zweite Differenz 16 zwischen der oberen Grenztemperatur 8, 12 und der unteren Grenztemperatur 9, 13. Zum ersten Zeitpunkt 10 liegt die Isttemperatur 7 außerhalb eines Intervalls 14 zwischen der oberen Grenztemperatur 8, 12 und der unteren Grenztemperatur 9, 13. Zum zweiten Zeitpunkt 11 liegt die Isttemperatur 7 innerhalb des Intervalls 14 zwischen der oberen Grenztemperatur 8, 12 und der unteren Grenztemperatur 9, 12.

Die erste Differenz 15 beträgt hier ca. zwei Kelvin. Die zweite Differenz 16 beträgt hier ca. sieben Kelvin.

Wenn die Isttemperatur 7 außerhalb des Intervalls 14 zwischen der oberen Grenztemperatur 8, 12 und der unteren Grenztemperatur 9, 13 liegt, wird die Isttemperatur 7 an die bereits geänderte zweite Solltemperatur 6 angepasst. Eine geringe erste Differenz 15 kann dabei gewährleisten, dass diese Anpassung möglichst schnell durchgeführt werden kann.

Die größere zweite Differenz 16 stellt sicher, dass die erste Einrichtung 3 möglichst lange betrieben oder eben nicht betrieben wird.

Grundsätzlich ist erkennbar, dass sich die Differenz 15, 16 in Abhängigkeit von einer Geschwindigkeit der Änderung der Solltemperatur 5, 6 (erste Kurve 23) ändert, wobei eine zeitliche Nachführung der Änderung der Differenz 15, 16 gegenüber der Änderung der Solltemperatur 5, 6 erfolgt.

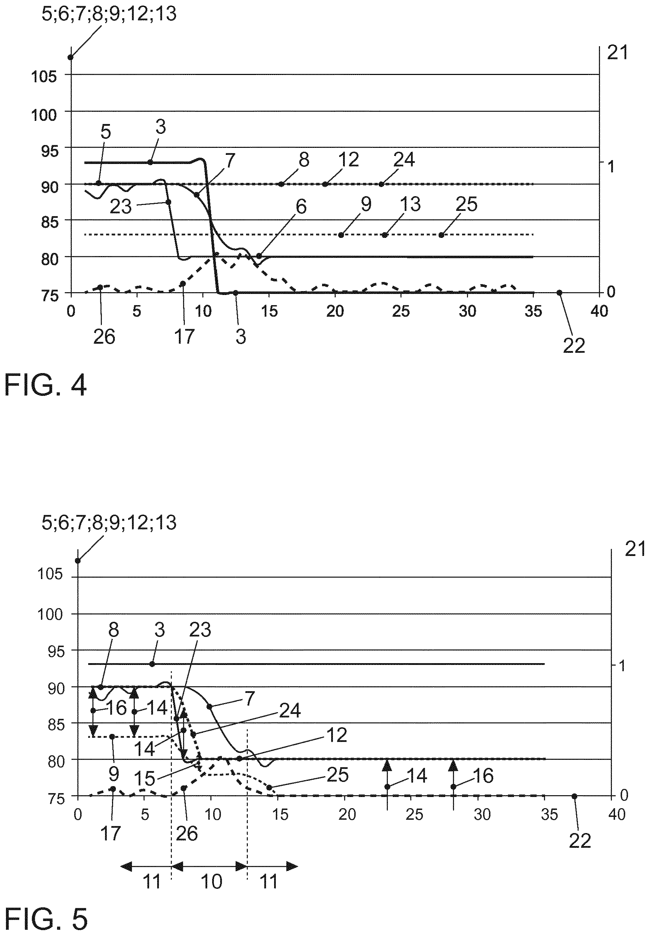

Fig. 4 zeigt ein Diagramm, in dem ein bekanntes Verfahren zum Temperieren eines Getriebes 2 dargestellt ist, wobei eine Solltemperatur 5, 6 herabgesetzt wird. Auf die Ausführungen zu Fig. 2 wird Bezug genommen.

Auch hier wird von einem Betrieb der ersten Einrichtung 3 als Anfangszustand ausgegangen. Die erste Kurve 23 zeigt den Abfall der Solltemperatur 5, 6 ausgehend von einer ersten Solltemperatur 5 hin zu einer zweiten Solltemperatur 6.

Ein Betrieb der ersten Einrichtung 3 wird dabei ausgesetzt, wenn eine Isttemperatur 7 der Antriebseinheit 4 höchstens der unteren Grenztemperatur 9, 13 entspricht.

Das Antriebssystem 1 umfasst einen zuschaltbaren Kühler 17, wobei der Kühler 17 zugeschaltet wird, wenn die Solltemperatur 5, 6 die Isttemperatur 7 unterschreitet. Über den Kühler 17 (vierte Kurve 26) wird die Wärmeenergie an die Umgebung abgeführt.

Fig. 5 zeigt ein Diagramm, in dem ein Verfahren zum Temperieren eines Getriebes 2 dargestellt ist, wobei eine Solltemperatur 5, 6 herabgesetzt wird. Auf die Ausführungen zu Fig. 2, 3 und 4 wird verwiesen.

Auch hier wird von einem Betrieb der ersten Einrichtung 3 als Anfangszustand ausgegangen. Die Isttemperatur 7 befindet sich anfänglich in einem Intervall 14 zwischen der ersten oberen Grenztemperatur 8 und der ersten unteren Grenztemperatur 9, es liegen also zwei zweite Zeitpunkte 11 vor.

Sobald die Änderung der Solltemperatur 5, 6 von einer ersten Solltemperatur 5 hin zu einer niedrigeren zweiten Solltemperatur 6 vorliegt, wird zunächst die Antriebseinheit 4 bzw. die Isttemperatur 7 so geregelt, dass sie möglichst schnell die geänderte zweite Solltemperatur 6 erreicht. Aus diesem Grund wird die untere Grenztemperatur 9, 13 so geändert, dass die erste Einrichtung 3 weiter betrieben wird (und damit ein Abführen von Wärmeenergie hin zum Getriebe 2 weiter erfolgt), so dass Wärmeenergie von der Antriebseinheit 4 abgeführt werden kann. Der Kühler 17 (vierte Kurve 26) kann entsprechend später zugeschaltet werden. Insgesamt wird so weniger Wärme aus dem Antriebssystem 1 abgeführt, so dass insgesamt weniger Energie verbraucht wird.

### Bezugszeichenliste

- 1: Antriebssystem
- 2: Getriebe
- 3: erste Einrichtung
- 4: Antriebseinheit
- 5: erste Solltemperatur
- 6: zweite Solltemperatur
- 7: Isttemperatur
- 8: obere erste Grenztemperatur
- 9: untere erste Grenztemperatur
- 10: erster Zeitpunkt
- 11: zweiter Zeitpunkt
- 12: obere zweite Grenztemperatur
- 13: untere zweite Grenztemperatur
- 14: Intervall
- 15: erste Differenz
- 16: zweite Differenz
- 17: Kühler
- 18: Kraftfahrzeug
- 19: Steuereinheit
- 20: Fluid
- 21: Zustand
- 22: Zeit
- 23: erste Kurve
- 24: zweite Kurve
- 25: dritte Kurve
- 26: vierte Kurve

## Patentansprüche

1. Verfahren zur Regelung einer Temperierung eines Antriebssystems (1); wobei das Antriebssystem (1) zumindest ein Getriebe (2) mit einer ersten Einrichtung (3) zum Temperieren des Getriebes (2) und eine Antriebseinheit (4) aufweist; wobei die erste Einrichtung (3) in Abhängigkeit von einer sich ändernden Solltemperatur (5, 6) der Antriebseinheit (4) betrieben wird; wobei eine Inbetriebnahme der ersten Einrichtung (3) und damit ein Beheizen des Getriebes (2) erfolgt, wenn eine Isttemperatur (7) der Antriebseinheit (4) mindestens eine obere erste Grenztemperatur (8) erreicht hat, wobei ein Betrieb der ersten Einrichtung (3) eingestellt ist, wenn die Isttemperatur (7) der Antriebseinheit (4) höchstens einer unteren ersten Grenztemperatur (9) entspricht, wobei zu jedem Zeitpunkt (10, 11) eine obere Grenztemperatur (8, 12) größer ist als eine untere Grenztemperatur (9, 13); **dadurch gekennzeichnet, dass** das Verfahren zumindest die folgenden Schritte umfasst:
a) Feststellen einer Änderung der Solltemperatur (5, 6) von einer ersten Solltemperatur (5) auf eine zweite Solltemperatur (6);
b) Änderung zumindest der oberen ersten Grenztemperatur (8) in eine obere zweite Grenztemperatur (12) oder der unteren ersten Grenztemperatur (9) in eine untere zweite Grenztemperatur (13), jeweils in Abhängigkeit von der Änderung der Solltemperatur (5, 6), so dass sich die zweite Grenztemperatur (12, 13) von der ersten Grenztemperatur (8, 9) unterscheidet.

2. Verfahren nach Patentanspruch 1, wobei das Verfahren ausgehend von einem Betrieb der ersten Einrichtung (3) erfolgt und ein Betrieb der ersten Einrichtung (3) fortgeführt wird, wenn die Isttemperatur (7) der Antriebseinheit (4) mindestens der oberen ersten Grenztemperatur (8) entspricht, wobei ein Betrieb der ersten Einrichtung (3) eingestellt wird, wenn die Isttemperatur (7) der Antriebseinheit (4) höchstens der unteren ersten Grenztemperatur (9) entspricht.

3. Verfahren nach einem der vorhergehenden Patentansprüche, wobei die obere zweite Grenztemperatur (12) der sich ändernden Solltemperatur (5, 6) zeitlich nachgeführt wird, bis die obere zweite Grenztemperatur (12) im Wesentlichen der zweiten Solltemperatur (6) entspricht.

4. Verfahren nach einem der vorhergehenden Patentansprüche, wobei die untere zweite Grenztemperatur (13) der sich ändernden Solltemperatur (5, 6) zeitlich nachgeführt wird.

5. Verfahren nach einem der vorhergehenden Patentansprüche, wobei eine Differenz zwischen der oberen Grenztemperatur (8, 12) und der unteren Grenztemperatur (9, 13) in Abhängigkeit von einer Geschwindigkeit der Änderung der Solltemperatur (5, 6) geändert wird.

6. Verfahren nach einem der vorhergehenden Patentansprüche, wobei zu einem ersten Zeitpunkt (10), bei dem die Isttemperatur (7) außerhalb eines Intervalls (14) zwischen oberer Grenztemperatur (8, 12) und unterer Grenztemperatur (9, 13) liegt, eine vorliegende erste Differenz (15) zwischen der oberen Grenztemperatur (8, 12) und der unteren Grenztemperatur (9, 13) kleiner ist als eine zu einem zweiten Zeitpunkt (11), bei dem die Isttemperatur (7) innerhalb des Intervalls (14) liegt, vorliegende zweite Differenz (16) zwischen der oberen Grenztemperatur (8, 12) und der unteren Grenztemperatur (9, 13).

7. Verfahren nach einem der vorhergehenden Patentansprüche, wobei das Antriebssystem (1) einen zuschaltbaren Kühler (17) umfasst, wobei der Kühler (17) zugeschaltet wird, wenn die Solltemperatur (5, 6) die Isttemperatur (7) unterschreitet.

8. Antriebssystem (1) für ein Kraftfahrzeug (18), wobei das Antriebssystem (1) zumindest ein Getriebe (2) mit einer ersten Einrichtung (3) zum Temperieren des Getriebes (2) und eine Antriebseinheit (4) zum Antrieb des Kraftfahrzeuges (18) sowie eine Steuereinheit (19) aufweist, wobei die Antriebseinheit (4) mit einer sich ändernden Solltemperatur (5, 6) betreibbar ist und wobei die Steuereinheit (19) eingerichtet zur Durchführung eines Verfahrens nach einem der vorhergehenden Patentansprüche ist.

9. Antriebssystem (1) nach Patentanspruch 8, wobei die Antriebseinheit (4) durch ein Fluid (20) temperierbar ist, wobei über das Fluid (20) die erste Einrichtung (3) und damit das Getriebe (2) temperierbar ist; wobei über das Fluid (20) die Isttemperatur (7) der Antriebseinheit (4) bestimmbar ist.

10. Kraftfahrzeug (18) mit einem Antriebssystem (1) nach einem der vorhergehenden Patentansprüche 8 und 9.

## Claims

1. Method for regulating a temperature control of a drive system (1); wherein the drive system (1) has at least one gearing (2) with a first device (3) for controlling the temperature of the gearing (2), and a drive unit (4); wherein the first device (3) is operated in accordance with a changing setpoint temperature (5, 6) of the drive unit (4); wherein the first device (3) is set into operation and therefore the gearing (2) is heated when an actual temperature (7) of the drive unit (4) has reached at least one upper first limit temperature (8), wherein operation of the first device (3) is stopped when the actual temperature (7) of the drive unit (4) corresponds at most to a lower first limit temperature (9), wherein an upper limit temperature (8, 12) is greater than a lower limit temperature (9, 13) at every time (10, 11); **characterized in that** the method comprises at least the following steps:
a) determining a change of the setpoint temperature (5, 6) from a first setpoint temperature (5) to a second setpoint temperature (6);
b) changing at least the upper first limit temperature (8) into an upper second limit temperature (12) or the lower first limit temperature (9) into a lower second limit temperature (13), in each case in accordance with the change of the setpoint temperature (5, 6), such that the second limit temperature (12, 13) differs from the first limit temperature (8, 9).

2. Method according to Patent Claim 1, wherein the method is carried out starting from operation of the first device (3), and operation of the first device (3) is continued when the actual temperature (7) of the drive unit (4) corresponds at least to the upper first limit temperature (8), wherein operation of the first device (3) is stopped when the actual temperature (7) of the drive unit (4) corresponds at most to the lower first limit temperature (9).

3. Method according to either of the preceding patent claims, wherein the upper second limit temperature (12) is adjusted in terms of time to the changing setpoint temperature (5, 6) until the upper second limit temperature (12) substantially corresponds to the second setpoint temperature (6).

4. Method according to one of the preceding patent claims, wherein the lower second limit temperature (13) is adjusted in terms of time to the changing setpoint temperature (5, 6).

5. Method according to one of the preceding patent claims, wherein a difference between the upper limit temperature (8, 12) and the lower limit temperature (9, 13) is changed in accordance with a speed of the change of the setpoint temperature (5, 6).

6. Method according to one of the preceding patent claims, wherein, at a first time (10), at which the actual temperature (7) lies outside an interval (14) between an upper limit temperature (8, 12) and a lower limit temperature (9, 13), a first difference (15) present between the upper limit temperature (8, 12) and the lower limit temperature (9, 13) is smaller than a second difference (16) between the upper limit temperature (8, 12) and the lower limit temperature (9, 13), which second difference (16) is present at a second time (11), at which the actual temperature (7) lies within the interval (14) .

7. Method according to one of the preceding patent claims, wherein the drive system (1) comprises a cooler (17) which can be switched on, wherein the cooler (17) is switched on when the setpoint temperature (5, 6) falls short of the actual temperature (7).

8. Drive system (1) for a motor vehicle (18), wherein the drive system (1) has at least one gearing (2) with a first device (3) for controlling the temperature of the gearing (2), and a drive unit (4) for driving the motor vehicle (18), and a control unit (19), wherein the drive unit (4) is operable with a changing setpoint temperature (5, 6), and wherein the control unit (19) is configured for carrying out a method according to one of the preceding patent claims.

9. Drive system (1) according to Patent Claim 8, wherein the drive unit (4) can be temperature-controlled by a fluid (20), wherein the first device (3) and therefore the gearing (2) can be temperature-controlled via the fluid (20); wherein the actual temperature (7) of the drive unit (4) is determinable via the fluid (20).

10. Motor vehicle (18) with a drive system (1) according to either of the preceding Patent Claims 8 and 9.

## Revendications

1. Procédé de régulation d'une thermorégulation d'un système d'entraînement (1) ; le système d'entraînement (1) comprenant au moins une transmission (2) dotée d'un premier dispositif (3) servant à la thermorégulation de la transmission (2) et une unité d'entraînement (4) ; le premier dispositif (3) fonctionnant en fonction d'une température de consigne variable (5, 6) de l'unité d'entraînement (4) ; une mise en service du premier dispositif (3) et donc un chauffage de la transmission (2) ayant lieu lorsqu'une température réelle (7) de l'unité d'entraînement (4) a atteint au moins une première température limite supérieure (8), un fonctionnement du premier dispositif (3) étant réglé lorsque la température réelle (7) de l'unité d'entraînement (4) correspond au maximum à une première température limite inférieure (9), une température limite supérieure (8, 12) étant supérieure à une température limite inférieure (9, 13) à chaque instant (10, 11) ; **caractérisé en ce que** le procédé comporte au moins les étapes suivantes :
a) détermination d'une variation de la température de consigne (5, 6) d'une première température de consigne (5) à une deuxième température de consigne (6) ;
b) variation au moins de la première température limite supérieure (8) à une deuxième température limite supérieure (12) ou de la première température limite inférieure (9) à une deuxième température limite inférieure (13), respectivement en fonction de la variation de la température de consigne (5, 6), de sorte que la deuxième température limite (12, 13) soit différente de la première température limite (8, 9).

2. Procédé selon la revendication 1, le procédé ayant lieu à partir d'un fonctionnement du premier dispositif (3) et un fonctionnement du premier dispositif (3) étant continué lorsque la température réelle (7) de l'unité d'entraînement (4) correspond au moins à la première température limite supérieure (8), un fonctionnement du premier dispositif (3) étant réglé lorsque la température réelle (7) de l'unité d'entraînement (4) correspond au maximum à la première température limite inférieure (9).

3. Procédé selon l'une des revendications précédentes, la deuxième température limite supérieure (12) étant asservie dans le temps à la température de consigne variable (5, 6), jusqu'à ce que la deuxième température limite supérieure (12) corresponde sensiblement à la deuxième température de consigne (6).

4. Procédé selon l'une des revendications précédentes, la deuxième température limite inférieure (13) étant asservie dans le temps à la température de consigne variable (5, 6).

5. Procédé selon l'une des revendications précédentes, une différence entre la température limite supérieure (8, 12) et la température limite inférieure (9, 13) étant modifiée en fonction d'une vitesse de la variation de la température de consigne (5, 6).

6. Procédé selon l'une des revendications précédentes, dans lequel à un premier instant (10) auquel température réelle (7) est située en dehors d'un intervalle (14) entre la température limite supérieure (8, 12) et la température limite inférieure (9, 13), une première différence existante (15) entre la température limite supérieure (8, 12) et la température limite inférieure (9, 13) est inférieure à une deuxième différence (16) entre la température limite supérieure (8, 12) et la température limite inférieure (9, 13), existant à un deuxième instant (11) auquel la température réelle (7) est située à l'intérieur de l'intervalle (14).

7. Procédé selon l'une des revendications précédentes, le système d'entraînement (1) comportant un radiateur (17) pouvant être activé, le radiateur (17) étant activé lorsque la température de consigne (5, 6) passe en dessous de la température réelle (7).

8. Système d'entraînement (1) pour un véhicule automobile (18), le système d'entraînement (1) comprenant au moins une transmission (2) dotée d'un premier dispositif (3) servant à la thermorégulation de la transmission (2) et une unité d'entraînement (4) servant à l'entraînement du véhicule automobile (18) ainsi qu'une unité de commande (19), l'unité d'entraînement (4) pouvant fonctionner à une température de consigne variable (5, 6) et l'unité de commande (19) étant conçue pour la mise en œuvre d'un procédé selon l'une des revendications précédentes.

9. Système d'entraînement (1) selon la revendication 8, l'unité d'entraînement (4) pouvant être thermorégulée par un fluide (20), le premier dispositif (3) et donc la transmission (2) pouvant être thermorégulés par le biais du fluide (20) ; la température réelle (7) de l'unité d'entraînement (4) pouvant être déterminée par le biais du fluide (20).

10. Véhicule automobile (18) comportant un système d'entraînement (1) selon l'une des revendications précédentes 8 et 9.
